# DEMANDE DE BREVET EUROPEEN

(11) **EP 0 949 214 A1**
(43) Date de publication de la demande: **13.10.1999**
(21) Numéro de dépôt: 99400795.3
(22) Date de dépôt: 01.04.1999
(51) Int. Cl.: C03B 37/018, C03B 37/014, C03B 23/045, C03B 37/027

(54) **Dispositif de fabrication d'une préforme de fibre optique comprenant une bague pour piéger et diffuser un rayonnement lumineux**

(30) Priorité: 06.04.1998 FR 9804229
(71) Demandeur: ALCATEL, 75008 Paris (FR)
(72) Inventeur: Pezet, Didier, 27091 Saint Sébastian de Morcent (FR); Lavanant, Gérard, 59130 Lambersart (FR)
(74) Mandataire: Feray, Valérie

(57) **Abrégé**

L'invention concerne un dispositif de fabrication d'une préforme de fibre optique à partir d'un tube (3) en un matériau vitreux, qui comprend :
- des moyens (5A, 5B) pour maintenir ledit tube (3) durant la fabrication de ladite préforme,
- un moyen de chauffage (9) pour fournir audit tube (3) l'énergie thermique nécessaire à la fabrication de ladite préforme.

Selon l'invention, un moyen de diffusion (15) est disposé autour d'au moins l'une des extrémités (3A, 3B) dudit tube (3) pour piéger et diffuser un rayonnement lumineux engendré dans ledit tube (3) par ledit moyen de chauffage (9).

L'invention s'applique également à un dispositif de fibrage d'une préforme de fibre optique.

## Description

L'invention concerne un dispositif de fabrication d'une préforme de fibre optique, qui comprend un tour verrier pour maintenir un tube de verre par l'intermédiaire de mandrins serrés aux deux extrémités du tube, des moyens d'alimentation en gaz pour injecter des composés gazeux à l'intérieur du tube par l'intermédiaire d'une connexion étanche à une extrémité du tube, et une source d'énergie thermique nécessaire au dépôt des composés gazeux à l'intérieur du tube ou au rétreint du tube à la fin du dépôt.

Dans un tel dispositif, l'énergie thermique fournie par la source se transmet à la connexion étanche par l'intermédiaire d'une extrémité du tube de verre. Cette connexion comprend un joint d'étanchéité qui est ainsi porté à une température élevée lors du dépôt des composés gazeux ou lors du rétreint du tube. Or le caractère étanche du joint est très important pour prévenir tout risque de rejet des composés gazeux dans le milieu extérieur au dispositif ou de contamination du dépôt par le milieu extérieur.

On connaît une solution au problème de l'échauffement de la connexion étanche entre les moyens d'alimentation en gaz et l'extrémité du tube, qui consiste à définir un joint ayant une géométrie complexe et à le fabriquer avec des matériaux spéciaux pour garantir l'étanchéité de la connexion aux températures engendrées par le chalumeau. Toutefois cette solution entraîne un surcoût dans la fabrication de la préforme.

On connaît une autre solution au problème précédent qui consiste à maintenir le tube de verre sur le tour verrier par l'intermédiaire d'un embout tubulaire. De cette façon, l'extrémité du tube est disposée à une certaine distance de la connexion étanche et du mandrin qui ne sont en contact qu'avec l'embout tubulaire. Le diamètre intérieur de cet embout est légèrement supérieur au diamètre extérieur du tube de verre et est assemblé par collage sur une zone de recouvrement du tube de verre à l'intérieur de l'embout tubulaire. On crée ainsi une discontinuité qui permet de dissiper une grande partie de l'énergie thermique par l'intermédiaire de la section extrême du tube de verre. Toutefois cette solution entraîne là encore un surcoût dû à la réalisation et à l'assemblage de l'embout.

Des problèmes similaires se posent lors du rétreint d'une préforme fabriquée par un procédé de dépôt interne. En effet, lors du rétreint d'une préforme, cette dernière est maintenue à ses extrémités par des mandrins. Lorsque la préforme est chauffée par les moyens de chauffage en vue de son rétreint, le rayonnement thermique engendré par ces derniers échauffe les mandrins de maintien de la préforme ce qui entraîne un risque de grippage au niveau de ces derniers.

Des problèmes similaires se posent enfin lors du fibrage d'une préforme pour obtenir une fibre optique. En effet, lors du fibrage d'une préforme, cette dernière est maintenue verticalement à l'une de ses extrémités par un mandrin. Lorsque la préforme est chauffée par le four de fibrage, le rayonnement thermique engendré par ce dernier échauffe le mandrin de maintien de la préforme ce qui entraîne aussi un risque de grippage au niveau de ce dernier.

Un but de l'invention est de résoudre le problème de l'échauffement de la connexion étanche entre la centrale d'alimentation en gaz et l'extrémité du tube de verre dans un dispositif de fabrication d'une préforme d'une façon qui allie efficacité et économie.

Un autre but de l'invention est de résoudre le problème de l'échauffement des moyens de maintien d'une préforme lors du rétreint ou du fibrage de cette dernière.

A cet effet, l'invention propose un dispositif de fabrication d'une préforme de fibre optique à partir d'un tube en un matériau vitreux, qui comprend :
- des moyens pour maintenir ledit tube durant la fabrication de ladite préforme,
- un moyen de chauffage pour fournir audit tube l'énergie thermique nécessaire à la fabrication de ladite préforme,
**caractérisé en ce qu**'un moyen de diffusion est disposé autour d'au moins l'une des extrémités dudit tube pour piéger et diffuser un rayonnement lumineux engendré dans ledit tube par lesdits moyens de chauffage.

L'invention propose également un dispositif de fibrage d'une préforme de fibre optique, qui comprend :
- des moyens de maintien d'une extrémité de ladite préforme
- des moyens pour descendre ladite préforme maintenue par ladite extrémité dans un four de fibrage,
**caractérisé en ce qu**'un moyen de diffusion est disposé autour de ladite extrémité de ladite préforme pour piéger et diffuser un rayonnement lumineux engendré dans ladite extrémité par ledit four de fibrage.

L'énergie thermique fournie par les moyens de chauffage se propage dans le tube ou dans la préforme en direction de ses extrémités principalement sous la forme d'un rayonnement lumineux. L'énergie thermique qui est ainsi piégée et diffusée par le moyen de diffusion n'est donc pas transmise à la connexion étanche ou au mandrin de maintien, ce qui contribue à réduire leur échauffement.

Avantageusement, le moyen de diffusion a un indice de réfraction voisin de celui du tube. Il peut être par exemple également en un matériau vitreux. Ceci permet d'obtenir une bonne transmission du rayonnement entre le tube et le moyen de diffusion.

De manière avantageuse encore, un film de liquide peut être inséré entre le moyen de diffusion et le tube. Par l'intermédiaire du film de liquide, le rayonnement lumineux se transmet du tube au moyen de diffusion qui le diffuse dans le milieu extérieur. On augmente ainsi la transmission du rayonnement lumineux entre le tube et le moyen de diffusion. Ce film de liquide peut avoir un indice de réfraction voisin de celui du tube et du moyen de diffusion.

Grâce à l'invention, le moyen de diffusion est disposé facilement et rapidement sur le tube de verre de sorte qu'on réalise une économie d'équipement et de temps machine. De surcroît, le risque de casser le tube de verre lors du montage du moyen de diffusion est considérablement réduit par rapport au collage d'un embout tubulaire.

D'autres caractéristiques et avantages de l'invention apparaîtront à la lecture de la description d'un mode de réalisation de l'invention illustré par les dessins. Dans les figures suivantes :
- la figure 1 montre de façon schématique un dispositif de fabrication d'une préforme selon l'invention,
- la figure 2 est une vue agrandie de la figure 1 qui montre le moyen de diffusion selon l'invention,
- la figure 3 montre de façon schématique un dispositif de fibrage d'une préforme selon l'invention.

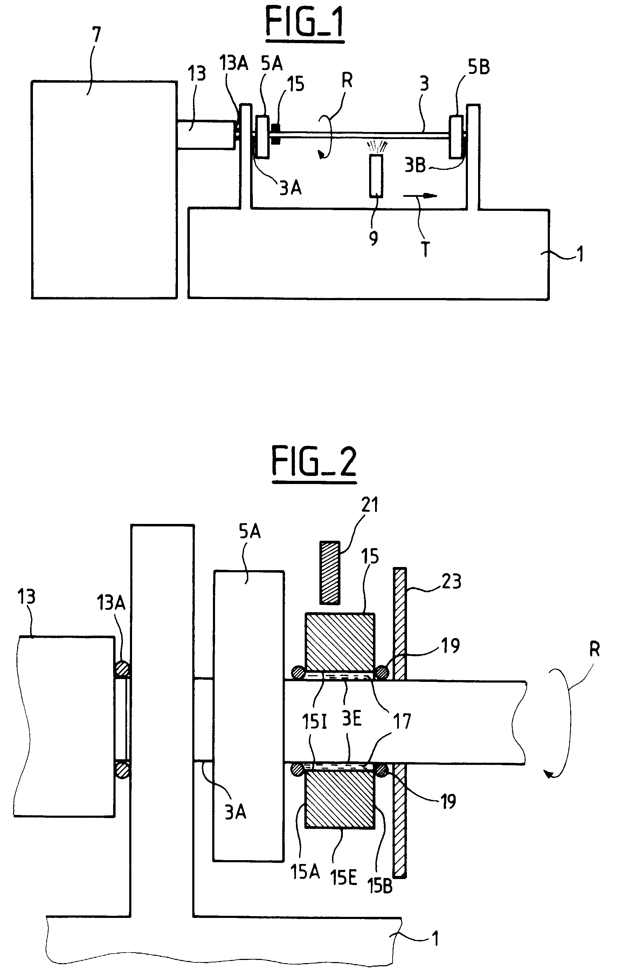

Un procédé de fabrication d'une préforme connu par exemple sous le nom de procédé MCVD est mis en oeuvre au moyen d'un dispositif comprenant, figure 1, un tour verrier 1 qui maintient un tube à base de silice 3 par l'intermédiaire de deux mandrins 5A et 5B serrés à deux extrémités 3A et 3B du tube de verre 3 en lui imposant un mouvement de rotation sur lui-même R. Un dispositif d'alimentation en gaz 7 permet d'injecter à l'intérieur du tube de silice 3 de l'oxygène O₂ qui est chargé de vapeurs de composés tels que par exemple le tétrachlorure de silicium SiCl₄ et le tétrachlorure de germanium GeCl₄. Un chalumeau 9 chauffe le tube de silice 3 en se déplaçant en translation T le long de ce dernier dans le même sens que l'écoulement des composés gazeux et qui, sur la figure 1, va de l'extrémité 3A serrée dans le mandrin 5A vers l'extrémité 3B serré dans le mandrin 5B. Lorsqu'il arrive à proximité de l'extrémité 3B, le chalumeau 9 revient rapidement à son point de départ pour recommencer une nouvelle passe.

Le chalumeau 9 fournit l'énergie thermique nécessaire au dépôt des composés gazeux à l'intérieur du tube de verre. Dans la zone de chauffe la plus proche du chalumeau 9, les composés gazeux réagissent en formant des particules qui se déposent ensuite sur la paroi interne du tube de silice 3 en aval du chalumeau 9 dans le sens d'écoulement des gaz. Les particules déposées sont vitrifiées par le chalumeau 9 au cours de son déplacement le long du tube de silice 3.

A la fin du dépôt, le tube de silice 3 comprend une gaine formée des couches déposées les premières et un coeur formées de couches déposées les dernières. Le dispositif d'alimentation en gaz 7 est alors fermé pour couper l'injection des gaz. L'opération de rétreint du tube de silice 3 commence, au cours de laquelle le chalumeau 9 élève la température du tube de silice 3 de façon à ramollir la silice et à provoquer un rétrécissement du tube. Après une passe dite d'attaque, le chalumeau 9 est déplacé à une vitesse très lente pour fermer le tube de silice 3 en une préforme pleine, qui pourra être éventuellement rechargée, c'est-à-dire sur laquelle on pourra éventuellement déposer des couches additionnelles à base de silice.

La communication entre le dispositif d'alimentation en gaz 7 et le tube de silice 3 est assurée à une extrémité 3A du tube par une connexion étanche 13 qui comprend un joint torique 13A. Le caractère étanche du joint est très important pour prévenir tout risque de rejet des composés gazeux dans le milieu extérieur au dispositif ou de contamination du dépôt MCVD par le milieu extérieur.

Selon l'invention, un moyen de diffusion sous la forme d'une bague 15 de forme cylindrique est disposé autour du tube de silice 3 et à proximité de la connexion étanche 13, en aval du mandrin 5A serrant l'extrémité 3A du tube de silice 3. Comme indiqué précédemment, la bague 15 peut être elle-même en silice pour présenter un indice de réfraction sensiblement égal à celui du tube 3 de sorte que le saut d'indice à l'interface est négligeable.

Un liquide est inséré entre la bague de verre et le tube pour former un film 17 (voir figure 2). L'énergie thermique fournie par le chalumeau 9 pendant le dépôt ou pendant le rétreint se propage dans le tube de silice 3 en direction de ses extrémités 3A et 3B principalement sous la forme d'un rayonnement lumineux. Par l'intermédiaire du film de liquide 17, ce rayonnement lumineux se transmet du tube 3 à la bague 15 qui le diffuse dans le milieu extérieur. L'énergie thermique qui est ainsi piégée et diffusée par la bague de silice 15 n'est donc pas transmise à la connexion étanche 13, ce qui contribue à réduire son échauffement. Par la présence du film de liquide 17 on augmente la transmission du rayonnement lumineux entre les deux pièces.

Le film de liquide 17 peut également posséder un indice de réfraction sensiblement égal à celui de la bague de verre 15 et du tube de verre 3. Comme on le voit sur la figure 2, la bague 15 est maintenue fixe par rapport au tube 3 par l'intermédiaire de joints 19 qui retiennent également le film de liquide 17 entre la bague 15 et le tube 3. L'utilisation de joints à lèvres, montés dans des logements adaptés et taillés dans la bague de silice 15, garantit un jeu constant avec le tube de silice 3. Le film de liquide 17 est réparti d'une façon homogène à l'interface entre les deux pièces, ce qui contribue encore à une bonne transmission du rayonnement lumineux.

Selon une variante du mode de réalisation de l'invention, le film de liquide 17 est inséré au contact d'une surface 15I de la bague 15 qui est soigneusement polie pour là encore augmenter la transmission du rayonnement lumineux à l'interface entre la bague et le tube. Il est prévu également de dépolir les faces latérales 15A et 15B et la face extérieure 15E de la bague de silice 15 pour augmenter la diffusion du rayonnement lumineux sous forme de chaleur dans le milieu extérieur au dispositif de fabrication de la préforme.

Il peut également être prévu de refroidir la bague de silice 15 à l'aide d'une soufflette à air comprimé 21 pour maintenir le film de liquide 17 à une température telle que son indice de réfraction reste sensiblement constant et égal à celui de la bague 15 et du tube 3. Un déflecteur 23 empêche l'air froid débité par la soufflette 21 de perturber le chauffage du tube de silice 3 par le chalumeau 9.

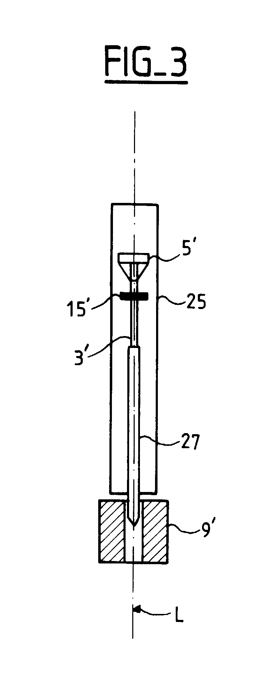

L'invention s'applique également à un dispositif de fibrage d'une préforme de fibre optique. Un dispositif de ce type comprend (voir figure 3) des moyens 25 de descente pour descendre une préforme 27 dans un four de fibrage 9'. Les moyens de descente 25 comprennent un mandrin borgne 5' qui est monté mobile en translation parallèlement à un axe de fibrage L pour déplacer la préforme 27 par l'intermédiaire d'un barreau de verre 3' serré à une extrémité dans le mandrin 5' et soudé à une autre extrémité à la préforme 27.

Selon l'invention, une bague de verre 15' est disposée autour du barreau de verre 3' et est disposée à proximité du mandrin 5' pour piéger et diffuser un rayonnement lumineux engendré dans le barreau de verre 3' par le four de fibrage 9'.

Comme indiqué précédemment, la bague 15' disposée autour du barreau 3' présente un indice de réfraction sensiblement égal à celui du barreau 3' de sorte que le saut d'indice à l'interface est négligeable. Un liquide est ensuite inséré entre la bague de verre et le barreau 3' pour former un film 17. L'énergie thermique fournie par le chalumeau 9' se propage dans le barreau 3' principalement sous la forme d'un rayonnement lumineux. Par l'intermédiaire du film de liquide 17, ce rayonnement lumineux se transmet du barreau 3' à la bague 15' qui le diffuse dans le milieu extérieur. L'énergie thermique qui est ainsi piégée et diffusée par la bague de silice 15' n'est donc pas transmise au mandrin borgne 5', ce qui contribue à réduire son échauffement et à prévenir un risque de grippage. Un mandrin borgne en acier réfractaire n'est donc pas nécessaire.

Les variantes décrites précédemment s'appliquent de la même façon à un dispositif de fibrage d'une préforme de fibre optique conforme à l'invention.

L'invention n'est par ailleurs pas limitée aux modes de réalisation qui viennent d'être décrits.

Notamment, l'espace entre le moyen de diffusion et la préforme peut être occupé non pas par un film de liquide mais par le milieu ambiant. Dans ce cas, il est préférable d'effectuer un ajustement à tolérances serrées du moyen de diffusion sur la préforme.

De manière alternative encore, le film de liquide peut être remplacé par un gel d'indice ou par un rôdage adapté.

## Revendications

1. Dispositif de fabrication d'une préforme de fibre optique à partir d'un tube (3) en un matériau vitreux, qui comprend :
• des moyens (5A, 5B) pour maintenir ledit tube (3) durant la fabrication de ladite préforme,
• un moyen de chauffage (9) pour fournir audit tube (3) l'énergie thermique nécessaire à la fabrication de ladite préforme,
**caractérisé en ce qu**'un moyen de diffusion (15) est disposé autour d'au moins l'une des extrémités (3A, 3B) dudit tube (3) pour piéger et diffuser un rayonnement lumineux engendré dans ledit tube (3) par ledit moyen de chauffage (9).

2. Dispositif de fibrage d'une préforme (27) de fibre optique, qui comprend :
• des moyens de maintien (5') d'une extrémité (3') de ladite préforme (27),
• des moyens (25) pour descendre ladite préforme (27) maintenue par ladite extrémité (3') dans un four de fibrage (9'),
**caractérisé en ce qu**'un moyen de diffusion (15') est disposé autour de ladite extrémité (3') de ladite préforme (25) pour piéger et diffuser un rayonnement lumineux engendré dans ladite extrémité (3') par ledit four de fibrage (9').

3. Dispositif selon l'une des revendications 1 ou 2 caractérisé en ce que ledit moyen de diffusion (15, 15') a un indice de réfraction voisin de celui dudit tube (3) ou de ladite extrémité tubulaire (3').

4. Dispositif selon la revendication 3 caractérisé en ce que ledit moyen de diffusion (15, 15') est constitué d'un matériau vitreux.

5. Dispositif selon l'une des revendications 1 à 4 caractérisé en ce qu'un film de liquide (17) est inséré entre ledit moyen de diffusion (15, 15') et ledit tube (3) ou ladite extrémité tubulaire (3').

6. Dispositif selon la revendication 5 caractérisé en ce que ledit film de liquide (17) a un indice de réfraction voisin de celui dudit moyen de diffusion (15, 15') et de celui dudit tube (3) ou de ladite extrémité tubulaire (3').

7. Dispositif selon l'une des revendications 5 ou 6 caractérisé en ce que ledit film de liquide (17) est inséré au contact d'une surface polie (15I) dudit moyen de diffusion (15,15').

8. Dispositif selon l'une des revendications 1 à 7 caractérisé en ce que ledit moyen de diffusion (15,15') possède des surfaces dépolies.

9. Dispositif selon l'une des revendications 1 à 8 caractérisé en ce que ledit moyen de diffusion (15,15') est maintenu fixe par rapport audit tube (3) ou à ladite extrémité tubulaire (3') par l'intermédiaire de joints (19).

10. Dispositif selon la revendication 9 caractérisé en ce que lesdits joints (19) sont des joints à lèvres.

11. Dispositif selon l'une des revendications 1 à 10 caractérisé en ce qu'une soufflette (21) dirige de l'air sur ledit moyen de diffusion (15,15').
